# EUROPEAN PATENT APPLICATION

(11) **EP 4 382 229 A1**
(43) Date of publication of application: **12.06.2024**
(21) Application number: 23210058.6
(22) Date of filing: 15.11.2023
(51) Int. Cl.: B22F 10/22, B22F 10/36, B22F 10/364, B22F 10/50, B22F 10/85, B22F 12/10, B22F 12/43, B22F 12/90, B23K 26/03, B23K 26/0622, B23K 26/362, B29C 64/112, B29C 64/188, B29C 64/273, B33Y 10/00, B33Y 30/00, B33Y 50/02

(54) **ADDITIVE MANUFACTURING SYSTEMS AND METHODS FOR THE SAME**

(30) Priority: 07.12.2022 US 202218063024
(71) Applicant: Xerox Corporation, Webster, NY 14580 (US)
(72) Inventor: MAEDA, Patrick Y., Palo Alto, 94304 (US); BULLARD, Daniel, Palo Alto, 94304 (US); TIMUCIN, Dogan, Palo Alto, 94304 (US)
(74) Representative: Gill Jennings & Every LLP

(57) **Abstract**

An additive manufacturing device includes a stage configured to support a substrate. The device also includes a printhead disposed above the stage. The printhead is configured to heat a build material to a molten build material and to deposit the molten build material on the substrate in the form of droplets to fabricate an article. The device also includes a controlled heating and ablation system disposed proximal the printhead. The controlled heating and ablation system is configured to heat the substrate and ablate oxides on a surface of the substrate.

## Description

### TECHNICAL FIELD

The presently disclosed embodiments or implementations are directed to additive manufacturing systems and method for the same.

### BACKGROUND

Liquid metal jet printing, such as magnetohydrodynamic (MHD) liquid metal jet printing, includes ejecting liquid or molten metal drops or droplets from a printhead to a substrate, which may be a heated substrate or previously deposited metal, to form a workpiece or article. Generally, liquid metal jet printing includes utilizing a direct current pulse applied by an electromagnetic coil to expel molten metal drops toward the substrate. As the metal drops contact the substrate, the metal drops cool to form the article.

The process of MHD liquid metal jet printing the workpiece or article involves complex thermofluidic processes that include, in part, remelting, coalescing, metallurgical bonding/adhesion, cooling, and solidification. Each of these thermo-fluidic processes must be controlled or regulated to fabricate articles having satisfactory properties. While liquid metal jet printing has made progress in regulating each of these processes, low surface temperatures of the underlying metal and/or the presence of an oxide layer or other contaminants hinder or inhibit one or more of these processes, thereby producing articles having unsatisfactory properties. For example, insufficient temperatures of the surfaces at which the metal drops or droplets are deposited may inhibit the remelting and/or coalescing of the metal drops and droplets. In another example, the oxide layer formed during fabrication may inhibit metallurgical bonding between the substrate or previously deposited metal and the metal droplets.

What is needed, then, are improved liquid metal jet printing systems and methods for the same.

### SUMMARY

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

An additive manufacturing device is disclosed. The device includes a stage configured to support a substrate. The device also includes a printhead disposed above the stage. The printhead is configured to heat a build material to a molten build material and to deposit the molten build material on the substrate in the form of droplets to fabricate an article. The device also includes a controlled heating and ablation system disposed proximal the printhead. The controlled heating and ablation system is configured to heat the substrate and ablate oxides on a surface of the substrate.

A method for fabricating an article with the additive manufacturing device is also disclosed. The method includes heating the build material in the printhead to the molten build material. The method also includes ejecting the molten build material from the printhead towards the substrate. The method also includes depositing the molten build material on the substrate. The method also includes heating the substrate with the controlled heating and ablation system. The method also includes ablating the oxides on the surface of the substrate with the controlled heating and ablation system.

In another embodiment, the additive manufacturing device includes a stage configured to support a substrate. The device also includes a printhead disposed above the stage. The printhead is configured to heat a build material to a molten build material and to deposit the molten build material on the substrate in the form of droplets to fabricate an article. The device also includes a controlled heating and ablation system disposed proximal the printhead. The controlled heating and ablation system includes a laser. An output from the laser has a power of from about 40 watts (W) to about 1500 W. The output also has an irradiance of from about 1 W/cm² to about 10,000 W/mm². The output also has a wavelength of from about 600 nm to about 1200 nm. The output also has a fluence (F) of from about 0.1 J/cm² to about 50 J/cm². The output also has a pulse energy of from about 1 microjoule (µJ) to about 50 millijoules (mJ). The output also has a pulse repetition rate of from about 5 kHz to about 250 MHz. The output also has a pulse width of from about 0.5 ns to about 100 ms. The output also has a pulse duration that is lower than a thermal relaxation time of the substrate to minimize a temperature increase of the substrate. The output is configured to concurrently heat the substrate and ablate oxides on a surface of the substrate. An area on the surface that is heated by the output has a diameter of from about 0.025 mm to about 1.0 mm. The device also includes a monitoring system configured to monitor a temperature of the substrate. The device also includes a computing system configured to adjust the controlled heating and ablation system based on the temperature of the substrate provided by the monitoring system.

The present disclosure may provide a method for fabricating an article with the additive manufacturing device. The method may include heating the build material in the printhead to the molten build material; ejecting the molten build material from the printhead towards the substrate; at least partially heating the droplets in the flight path; and depositing the molten build material on the substrate.

### BRIEF DESCRIPTION OF THE DRAWINGS

The accompanying drawings, which are incorporated in and constitute a part of this specification, illustrate embodiments of the present teachings. These and/or other aspects and advantages in the embodiments of the disclosure will become apparent and more readily appreciated from the following description of the various embodiments, taken in conjunction with the accompanying drawings of which:
Figure 1 illustrates a schematic cross-sectional view of an exemplary additive manufacturing layering device or 3D printer incorporating a controlled heating and ablation assisted metal printing (CHAMP) system, according to one or more embodiments disclosed.
Figure 2 illustrates a schematic view of another exemplary additive manufacturing layering device or 3D printer incorporating an exemplary CHAMP system, according to one or more embodiments disclosed.
Figure 3 illustrates a schematic view of another exemplary additive manufacturing layering device or 3D printer incorporating an exemplary CHAMP system, according to one or more embodiments.
Figure 4 illustrates a schematic view of another exemplary additive manufacturing device or 3D printer incorporating the exemplary CHAMP system, according to one or more embodiments disclosed.
Figure 5 illustrates a cross-sectional view of a substrate having an oxide layer disposed on a top surface of the substrate, according to one or more embodiments disclosed.
Figure 6 illustrates an exemplary scheme for concurrently heating and cleaning or ablating a substrate, according to one or more embodiments disclosed.
Figure 7 illustrates another exemplary scheme for concurrently heating and cleaning or ablating a substrate, according to one or more embodiments.
Figure 8 illustrates a schematic view of nanosecond pulsed laser thermo-mechanical effects, according to an embodiment.
Figure 9 illustrates another schematic view of nanosecond pulsed laser thermo-mechanical effects, according to an embodiment.
Figures 10A and 10B illustrate additional schematic views of nanosecond pulsed laser thermo-mechanical effects, according to an embodiment.

### DETAILED DESCRIPTION

The following description of various typical aspect(s) is merely exemplary in nature and is in no way intended to limit the disclosure, its application, or its uses.

As used throughout, ranges are used as shorthand for describing each and every value that is within the range. Any value within the range may be selected as the terminus of the range. In addition, all references cited herein are hereby incorporated by reference in their entirety. In the event of a conflict between a definition in the present disclosure and that of a cited reference, the present disclosure controls.

Additionally, all numerical values are "about" or "approximately" the indicated value, and take into account experimental error and variations that would be expected by a person having ordinary skill in the art. It should be appreciated that all numerical values and ranges disclosed herein are approximate values and ranges, whether "about" is used in conjunction therewith. It should also be appreciated that the term "about," as used herein, in conjunction with a numeral refers to a value that may be ± 0.01% (inclusive), ± 0.1% (inclusive), ± 0.5% (inclusive), ± 1% (inclusive) of that numeral, ± 2% (inclusive) of that numeral, ± 3% (inclusive) of that numeral, ± 5% (inclusive) of that numeral, ± 10% (inclusive) of that numeral, or ± 15% (inclusive) of that numeral. It should further be appreciated that when a numerical range is disclosed herein, any numerical value falling within the range is also specifically disclosed.

As used herein, the term "or" is an inclusive operator, and is equivalent to the term "and/or," unless the context clearly dictates otherwise. The term "based on" is not exclusive and allows for being based on additional factors not described, unless the context clearly dictates otherwise. In the specification, the recitation of "at least one of A, B, and C," includes embodiments containing A, B, or C, multiple examples of A, B, or C, or combinations of A/B, A/C, B/C, A/B/B/ BB/C, A/B/C, etc. In addition, throughout the specification, the meaning of "a," "an," and "the" include plural references. The meaning of "in" includes "in" and "on."

Reference will now be made in detail to exemplary embodiments of the present teachings, examples of which are illustrated in the accompanying drawings. Wherever possible, the same reference numbers will be used throughout the drawings to refer to the same, similar, or like parts.

The present disclosure is directed to additive manufacturing devices or 3D printers and methods for the same. Particularly, the present disclosure is directed to a heating and ablation system, or a controlled heating and ablation assisted metal printing (CHAMP) system, for the 3D printers and methods for the same. The CHAMP systems disclosed herein are capable of or configured to ablate (e.g., partially evaporate or mechanically disrupt) oxide layers on surfaces of a substrate, provide controlled heating of the substrate, or combinations thereof.

Forming metal workpieces, structures, or articles with molten metal droplets involves complex thermo-fluidic processes that include, in part, re-melting, coalescing, metallurgical bonding and/or adhesion, cooling, and solidification. As briefly discussed above, each of these thermo-fluidic processes must be controlled or regulated to fabricate articles having satisfactory properties and shapes, and inappropriate surface temperatures and/or the presence of oxide layers and/or other contaminants may often inhibit these thermo-fluidic processes. For example, inappropriate or insufficient interfacial temperatures, or temperatures at the interface between the molten metal droplets and the previously deposited materials or the substrate (e.g., droplets), may often result in poor remelting and poor metallurgical bonding or coalescing, thereby resulting in voids and cold lap (lack of fusion) in the fabricated workpieces or articles.

The interfacial temperature is generally determined by the droplet temperature and the surface temperature of the previously deposited material or substrate. It should be appreciated that obtaining and retaining accurate part shapes and z-heights are also negatively impacted by the interfacial temperature between the molten metal droplets and the previously deposited materials or substrates (e.g., droplets). While insufficient interfacial temperatures result in the formation of voids and cold laps, excessive interfacial temperatures result in the metal droplets flowing away from the previously deposited materials or substrates before solidification, thereby leading to the malformation of workpiece shapes and/or z-height errors.

The interfacial temperature may be affected by the initial droplet temperature, the build part surface temperature, the build plate temperature, drop frequency, the z-height of the workpiece or article, or a combination thereof. While it may be controlled at some level through process parameter optimization, the complex thermal processes involved may be too slow to keep up with the changes and dynamics that occur during 3D printing which can result in unacceptable interfacial temperatures. In addition to the foregoing, exposure of the deposited metals to oxidizing environments during 3D printing result in the formation of oxide layers that inhibit metallurgical bonding between the metal droplets and the substrate.

As further described herein, the CHAMP system may be capable of or configured to both facilitate the removal of the oxide layers and other contaminants, and regulate or control the temperature of the previously deposited materials or substrate. For example, the CHAMP system may be capable of or configured to remove the oxide layers and control the temperature and/or temperature gradient of the previously deposited materials or substrate and/or an area proximal the substrate by adjusting one or more of a beam profile of a laser, a pulse width of the laser, the amplitude of the laser pulses, a frequency of pulses of the laser, or the like, or combinations thereof.

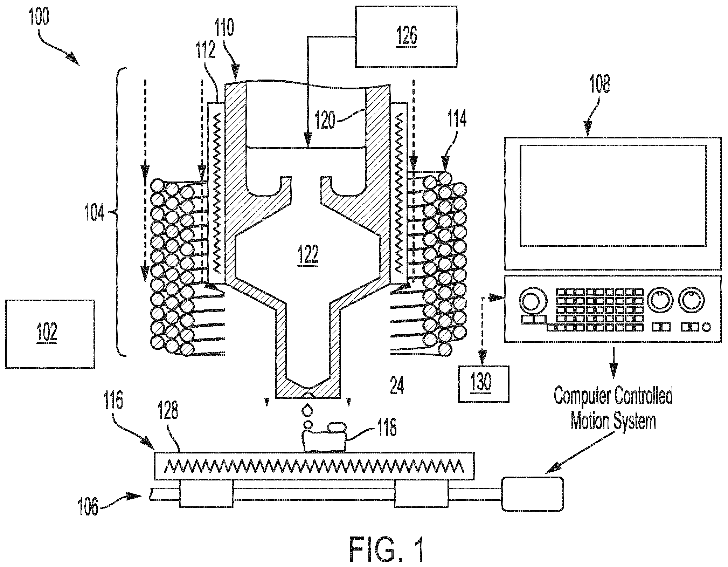

Figure 1 illustrates a schematic cross-sectional view of an exemplary additive manufacturing layering device (e.g., 3D printer) 100 incorporating a CHAMP system 102, according to one or more embodiments. The 3D printer 100 may be a liquid metal jet printing system, such as a magnetohydrodynamic (MHD) printer. It should be appreciated, however, that any additive manufacturing device may utilize the CHAMP system 102 and methods disclosed herein. The 3D printer 100 may include the exemplary CHAMP system 102, a printhead 104, a stage 106, a computing system 108, or any combination thereof.

The computing system 108 may be operably and/or communicably coupled with any one or more of the components of the 3D printer 100. The computing system 108 may be capable of or configured to operate, modulate, instruct, receive data from, send data to, or the like from any one or more of the components of the 3D printer 100. In an exemplary implementation, the computing system 108 is operably and/or communicably coupled with the CHAMP system 102.

The printhead 104 may include a body 110, which may also be referred to herein as a pump chamber or ejector, one or more heating elements (one is shown 112), one or more metallic coils 114, or any combination thereof, operably coupled with one another. As illustrated in Figure 1, the heating elements 112 may be at least partially disposed about the body 110, and the metallic coils 114 may be at least partially disposed about the body 110 and/or the heating elements 112. As used herein, a substrate 116 may refer to a surface of the stage 106, a previously deposited metal (e.g., metal droplets), an article 118 fabricated from the 3D printer 100 or a portion thereof, a platen 128, such as a heated platen or build plate disposed on the stage 106, and/or respective surfaces thereof. As illustrated in Figure 1, the substrate 116 may be disposed on or above the stage 106 and below the body 110. The body 110 may have an inner surface 120 defining an inner volume 122 thereof. The body 110 may define a nozzle 124 disposed at a first end portion of the body 110.

In an exemplary operation of the 3D printer 100 with continued reference to Figure 1, a build material (e.g., metal) from a source 126 may be directed to the inner volume 122 of the body 110. The heating elements 112 may at least partially melt the build material contained in the inner volume 122 of the body 110. For example, the build material may be a solid, such as a solid metal, and the heating elements 112 may heat the body 110 and thereby heat the build material from a solid to a liquid (e.g., molten metal). The metallic coils 114 may be coupled with a power source (not shown) capable of or configured to facilitate the deposition of the build material on the substrate 116. For example, the metallic coils 114 and the power source coupled therewith may be capable of or configured to generate a magnetic field, which may generate an electromotive force within the body 110, thereby generating an induced electrical current in the molten metal disposed in the body 110. The magnetic field and the induced electrical current in the molten metal may create a radially inward force on the liquid metal, known as a Lorentz force, which creates a pressure at the nozzle 124. The pressure at the nozzle 124 may expel the molten metal out of the nozzle 124 toward the substrate 116 and/or the stage 106 in the form of one or more drops or droplets to thereby form at least a portion of the article 118.

In at least one embodiment, the 3D printer 100 may include a monitoring system 130 capable of or configured to control and/or monitor one or more components or portions of the 3D printer 100, the formation of the article 118, one or more portions of the substrate 116, one or more areas proximal the substrate 116, and/or the deposition of the droplets. For example, the monitoring system 130 may include one or more illuminators (not shown) capable of or configured to measure droplet, build part, build plate, and substrate temperatures, measure build part shape and z-height, measure droplet size and rate, or the like, or any combination thereof. Illustrative illuminators may be or include, but are not limited to, lasers, LEDs, lamps of various types, fiber optic light sources, or the like, or combinations thereof. In another example, the monitoring system 130 may include one or more sensors (not shown) capable of or configured to measure a temperature of one or more components or portions of the 3D printer 100. Illustrative sensors may be or include, but are not limited to, pyrometers, thermistors, imaging cameras, thermal cameras, photodiodes, or the like, or combinations thereof. The monitoring system 130 may also be capable of or configured to provide feedback or communicate with the computing system 108.

In at least one embodiment, any one or more components of the 3D printer 100 may move independently with respect to one another. For example, any one or more of the printhead 104, the stage 106 and the platen 128 coupled therewith, the CHAMP system 102, the monitoring system 130, or any combination thereof may move independently in the x-axis, the y-axis, and/or the z-axis, with respect to any one or more of the other components of the 3D printer 100. In another embodiment, any two or more of the components of the 3D printer 100 may be coupled with one another; and thus, may move with one another. For example, the printhead 104 and the CHAMP system 102 may be coupled with one another via a mount (not shown) such that the movement or translation of the printhead 104 in the x-axis, the y-axis, and/or the z-axis results in a corresponding movement of the CHAMP system 102 in the x-axis, the y-axis, and/or the z-axis, respectively. Similarly, the CHAMP system 102 and the stage 106 may be coupled with one another via a mount (not shown) such that the movement of the CHAMP system 102 in the x-axis, the y-axis, and/or the z-axis results in a corresponding movement of the stage 106 in the x-axis, the y-axis, and/or the z-axis, respectively.

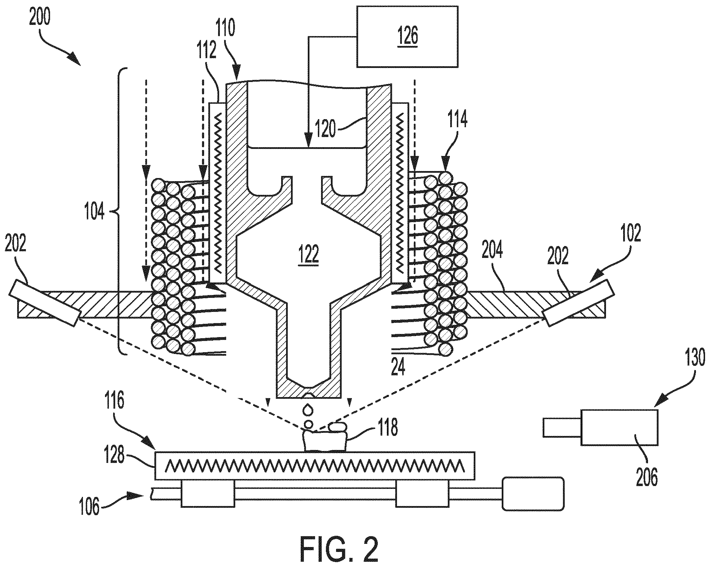

Figure 2 illustrates a schematic view of another exemplary additive manufacturing layering device (e.g., 3D printer) 200 incorporating the exemplary CHAMP system 102, according to one or more embodiments. The 3D printer 200 illustrated in Figure 2 may be similar in some respects to the 3D printer 100 described above and therefore may be best understood with reference to the description of Figure 1, where like numerals designate like components and will not be described again in detail.

As illustrated in Figure 2, the CHAMP system 102 of the 3D printer 100 may include one or more lasers (two are shown 202). The lasers 202 may include external optical components like filters, collimating optics, focusing optics and beam shaping optics to achieve desired irradiance levels, irradiance pattern (i.e., circular, elliptical, etc.), and/or irradiance profiles (i.e., Gaussian, top-hat, doughnut mode, multimode, etc.). As further illustrated in Figure 2, the lasers 202 may be coupled with the printhead 104 via a mount 204. While Figure 2 illustrates the lasers 202 of the CHAMP system 102 coupled with the printhead 104, it should be appreciated that the CHAMP system 102 or the lasers 202 thereof may be independent of one another or coupled with any other component of the 3D printer 200. As illustrated in Figure 2, any one or more of the lasers 202 may be capable of or configured to direct a laser beam on or proximal the substrate 116.

The lasers 202 of the CHAMP system 102 may be or include any suitable laser that is capable of or configured to sufficiently heat the substrate 116 and/or an area proximal the substrate 116. The laser 202 of the CHAMP system 102 may also be or include any suitable laser that is capable of or configured to remove or ablate oxides from surfaces of the substrate 116. In at least one embodiment, the type of the lasers 202 utilized may be at least partially dependent on the build material, such as the type of metal being deposited to fabricate the article 118. In another embodiment, the type of the lasers 202 utilized may at least partially depend on a rate at which the drops are deposited on the substrate 116 or the deposition rate.

The laser 202 may be or include, but is not limited to, a high-power pulse laser, a high-power pulse fiber laser, a high-power pulse fiber-coupled laser, an in-line high power laser imager, or the like, or a combination thereof. The laser 202, such as the in-line high power laser image, may be capable of or configured to deliver targeted high power laser energy to the substrate 116 and/or an area proximal the substrate 116. The high power laser imager may be a spot imager, 1D imager, or a 2D imager. The in-line high power laser imager may utilize one or more of a high power laser, arrays of independently addressable diode lasers or vertical cavity surface emitting lasers (VCSELs), an illumination optical system, a spatial light modulator, a pixelated spatial light modulator, a projection optical system, or combinations thereof. The illumination optical system may be capable of or configured to shape the laser emission and deliver it onto the spatial light modulator. The projection optical system may be capable of or configured to image the spatial light modulator onto the substrate 116 and/or an area proximal the substrate 116. A pixelated line image or 1D image may be produced with a linear spatial light modular, or linear arrays of diode lasers or VCSELs.

Illustrative linear spatial light modulators may be or include, but are not limited to, a Grating Light Valve (GLV), digital Micromirror Device (DMD), a Liquid-Crystal on Silicon (LCOS) spatial light modulator, or the like, or combinations thereof. A pixelated area image or 2D image may be produced with a spatial light modulator or 2D arrays of VCSELs. Illustrative spatial light modulators for producing the 2D image may be or include, but are not limited to, a 2D digital Micromirror Device (DMD), a 2D Liquid-Crystal on Silicon (LCOS) spatial light modulator, or the like, or combinations thereof. The 1D or 2D imager may be capable of or configured to pattern over a line or area to delivery targeted laser energy to more than one droplet location on the substrate 116 and/or an area proximal the substrate 116. The 1D or 2D imager may be capable of or configured to shape the laser beam profile within one or more droplet locations to alter local thermal gradients within the melt pool of the one or more droplets at the substrate 116 and/or proximal an area of the substrate 116. This is especially important for systems that employ printheads with multiple independent ejectors that enable parallel printing for faster build part fabrication and higher throughput.

In an exemplary embodiment, the lasers 202 may have an irradiance of from about 1 W/cm² to about 10,000 W/mm². For example, any one or more of the lasers 202 may have an irradiance of from about 1 W/cm² up to 1,000 W/cm², about 2,000 W/cm², about 3,000 W/cm², about 4,000 W/cm², or about 4,500 W/cm² to about 5,500 W/cm², about 6,000 W/cm², about 7,000 W/cm², about 8,000 W/cm², about 9,000 W/cm², about 10,000 W/cm², or about up to 1,000,000 W/cm². It should be appreciated that much lower power lasers or laser arrays could also be used depending on the application, metal, configuration, spot size, or combinations thereof. It should further be appreciated that any one or more of the lasers 202 may include a combination of power and optical configurations, including collimated and non-collimated lasers, that may achieve the desired irradiance.

As further illustrated in Figure 2, the monitoring system 130 may include a pyrometer 206 capable of or configured to measure a temperature of the substrate 116 or an area near or proximal the substrate 116. For example, the pyrometer 206 may be capable of or configured to measure an area at and/or proximal the substrate 116 heated by the lasers 202 of the CHAMP system 102. In another example, the pyrometer 206 may be capable of or configured to measure a temperature of the droplets from the printhead 104 or any other components of the 3D printer 200.

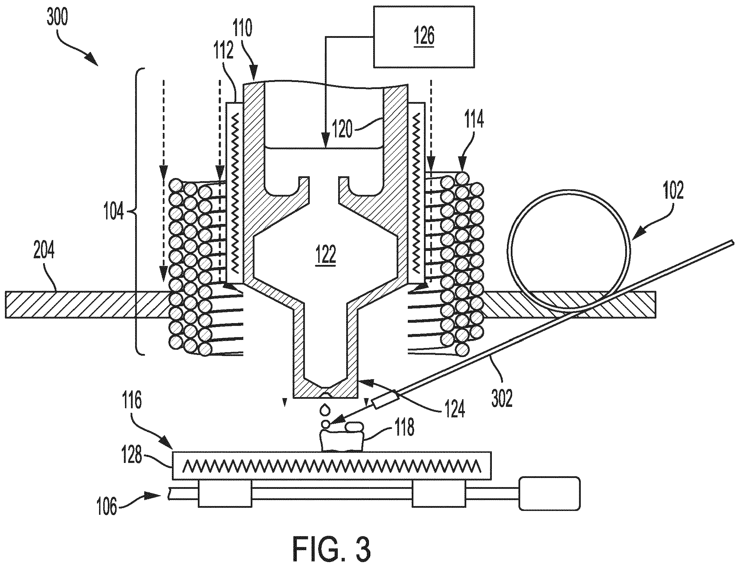

Figure 3 illustrates a schematic view of another exemplary additive manufacturing layering device (e.g., 3D printer) 300 incorporating the exemplary CHAMP system 102, according to one or more embodiments. The 3D printer 300 illustrated in Figure 3 may be similar in some respects to the 3D printers 100, 200 described above and therefore may be best understood with reference to the description of Figures 1 or 2, where like numerals designate like components and will not be described again in detail.

As illustrated in Figure 3, the CHAMP system 102 may include one or more fiber lasers 302, such as a fiber-coupled laser. As further illustrated in Figure 3, the fiber laser 302 may be coupled with the printhead 104 via the mount 204. The fiber laser 302 of the CHAMP system 102 may be or include any suitable fiber laser 302 capable of or configured to ablate surfaces of the substrate and/or sufficiently heat the substrate 116 and/or an area proximal the substrate 116. In at least one embodiment, the fiber laser 302 utilized may be at least partially dependent on the build material and/or the oxide formed on the build material. In another embodiment, the fiber laser 302 utilized may at least partially depend on a rate at which the drops are deposited on the substrate 116 or the deposition rate.

The laser 202 and/or the fiber laser 302 disclosed herein may be capable of or configured to output a continuous wave (CW). The laser 202 and/or the fiber laser 302 may also be capable of or configured to output a pulsed wave beam. The laser 202 and/or the fiber laser 302 may be polarized or unpolarized. The output light of laser 202 and/or the fiber laser 302 may be delivered by an optical single mode or an optical multimode output fiber. The output light of the laser 202 and/or the fiber laser 302 may be collimated and/or shaped with an external optical system. The laser 202 and/or the fiber laser 302 may be capable of or configured to operate at high ambient temperatures, such as temperatures of the 3D printers described herein. In at least one embodiment, at least a portion of the laser 202 and/or the fiber laser 302 may be cooled, such as water-cooled. In yet another embodiment, at least a portion of the laser 202 and/or the fiber laser 302 may be located outside a high temperature area of the 3D printers described herein. For example, at least a portion of the laser 202 and/or the fiber laser 302 may be disposed in an area having temperatures of less than 550°C, less than 400°C, less than 300°C, or less than 200°C. It should be appreciated that the operating temperatures of the 3D printer may at least partially depend on the metal being deposited.

The laser 202 and/or the fiber laser 302 may provide or form a laser or an output having a wavelength of from about 600 nm to about 1200 nm. Though, it should be appreciated that other wavelengths could be used as they become commercially available from laser suppliers and manufacturers. For example, the wavelength of the output from the laser 202 and/or the fiber laser 302 may be from about 355nm, 450 nm, 532 nm, 600 nm, about 700 nm, about 750 nm, about 780 nm, or about 800 nm to about 880 nm, about 900 nm, about 950 nm, about 1000 nm, about 1050 nm, about 1070 nm, about 1100 nm, about 1150 nm, or about 1200 nm.

The laser 202 and/or the fiber laser 302 may have an output power of from about 40 watts (W) to about 1,500 W. Though, it should be appreciated that other wattages could be used as they become commercially available from laser suppliers and manufacturers.

The laser 202 and/or the fiber laser 302 may have a pulse width of from about 0.5 ns to about 100 ms. Though, it should be appreciated that other pulse widths could be used as they become commercially available from laser suppliers and manufacturers. For example, the pulse width of the output from the laser 202 and/or the fiber laser 302 may be from about 0.1 ms to about 4.5 ms. In some applications CW (i.e., continuous wave, long on periods) or quasi-CW may be employed as well.

The laser 202 and/or the fiber laser 302 may have a pulse energy output of from about 1 µJ (microjoule) to about 50 mJ (millijoule). Though, it should be appreciated that other pulse energy outputs could be used as they become commercially available from laser suppliers and manufacturers. For example, the pulse energy outputs of the fiber laser 302 may be from about 0.05 mJ to 100 mJ.

The laser 202 and/or the fiber laser 302 may have pulse repetition rates of up to 2.5 megahertz (MHz). Though, it should be appreciated that higher pulse repetition rates could be used as they become commercially available from laser suppliers and manufacturers. For example, the pulse repetition rates of the output from the fiber laser 302 may be from about 5 kHz to 250 MHz.

The laser 202 or fiber laser 302 may have a fluence (F) sufficiently high to ablate or clean surfaces of the substrate 116 and/or sufficiently low to prevent overheating of the underlying metal of the substrate 116. As used herein, the fluence (F) may refer to energy density and may be defined by F=E/A, where E is the energy of a laser pulse and A is the area or spot size area of the laser pulse. The laser 202 or fiber laser 302 may have a fluence (F) of from about 0.1 J/cm² to about 50 J/cm².

It should be appreciated that any one or more of the lasers described herein may be substituted or used in conjunction with other types of lasers such as gas lasers, diode lasers, VCSELs, diode laser arrays, VCSEL arrays, diode-pumped solid state lasers, lasers in the near UV wavelength range (i.e., violet and blue) or visible wavelength range can also be used, or the like, or combinations thereof.

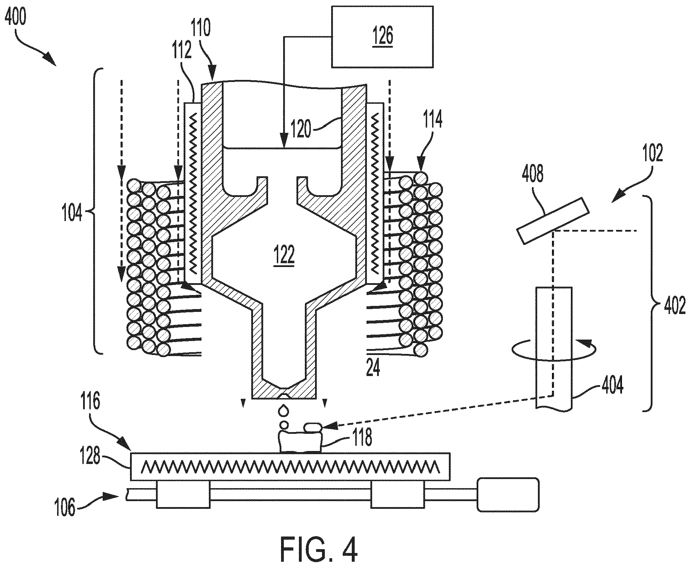

Figure 4 illustrates a schematic view of another exemplary additive manufacturing device (e.g., 3D printer) 400 incorporating the exemplary CHAMP system 102, according to one or more embodiments. The 3D printer 400 illustrated in Figure 4 may be similar in some respects to the 3D printers 100, 200, 300 described above and therefore may be best understood with reference to the description of the respective Figures, where like numerals designate like components and will not be described again in detail.

As illustrated in Figure 4, the CHAMP system 102 may include one or more monogon systems (one is shown 402). The monogon system 402 may be capable of or configured to ablate surfaces of the substrate 116 and/or sufficiently heat the substrate 116 and/or an area proximal the substate 116. In at least one embodiment, the monogon system 402 and/or the components thereof utilized may be at least partially dependent on the build material, such as the type of metal being deposited to fabricate the article 118. In another embodiment, the monogon system 402 and/or the components thereof utilized may at least partially depend on a rate at which the drops are deposited on the substrate 116 or the deposition rate.

The monogon system 402 may include one or more monogon scanners (one is shown 404), one or more mirrors (one is shown 408), or combinations thereof. The mirror 408 may be capable of or configured to receive an output source, such as a high power laser beam from any one or more of the lasers disclosed herein, and reflect or redirect the output source to the monogon scanner 404. The monogon scanner 404 may be capable of or configured to receive the output source from the mirror or another source and reflect or redirect the output source to the substrate 116 and/or an area proximal the substrate 116.

Any suitable monogon scanner 404 may be utilized. In at least one embodiment, illustrated in Figure 4, the monogon scanner 404 may be or include a rotating monogon total internal reflection (TIR) scanner capable of or configured to be rotated about an axis (e.g., vertical axis) thereof. The monogon scanner 404 may be rotated about the axis to direct or control a position of the output beam on the substrate 116 and/or an area proximal the substrate 116. Illustrative monogon scanners 404 may be or include, but are not limited to, a fused silica monogon optical scanner, or the like. The monogon scanner 404 may be capable of or configured to scan greater than 360° in azimuth by axial rotation of the monogon scanner 404. The monogon scanner 404 may also be capable of or configured to scan about 20° in altitude when utilized with the mirror 408 (e.g., galvo mirror). The monogon scanner 404 may be capable of or configured to operate under high ambient temperatures of from about 300°C or 500°C to about 1200°C, or about 600°C to about 1000°C. The monogon scanner 404 may be capable of or configured to operate with high laser powers (e.g., 1W to several kW).

In at least one embodiment, the monogon scanner 404 may be free or substantially free of a coating, such as a reflective coating or an anti-reflection coating. It should further be appreciated that the monogon system 402 may utilize a source of output (e.g., laser source or optical beam) outside of the high temperature area of the 3D printer 400. While Figure 4 illustrates a single monogon system 402, it should be appreciated that a plurality of monogon systems 402 may be independently operated to heat the substrate 116 and/or the area proximal the substrate 116. One or more galvanometer scanners may also be used.

The CHAMP system 102 disclosed herein may be capable of or configured to both facilitate the removal of oxides or oxide layers and/or other contaminants from surfaces of the substrate 116 and control the temperature and/or temperature gradient of the substrate 116 (e.g., previously deposited materials, substrate, and/or area proximal the substrate). As briefly discussed above, during 3D printing of metals, an oxide layer may form on surfaces of the substrate exposed to an oxidizing environment. For example, aluminum (Al) readily forms a passive oxide film of aluminum oxide (Al₂O₂) upon exposure to an oxidizing environment. The oxidation of aluminum and other metals is further accelerated by exposed to relatively high temperatures, such as temperatures experienced in the 3D printers 100, 200, 300, 400 disclosed herein. In addition to the foregoing, other contaminants may also be present on the substrate 116 from various sources. The presence of the oxide layer and/or other contaminants on surfaces of the substrate 116 inhibit the coalescing of the metal drops and/or inhibit metallurgical bonding between the substrate 116 and the metal drops.

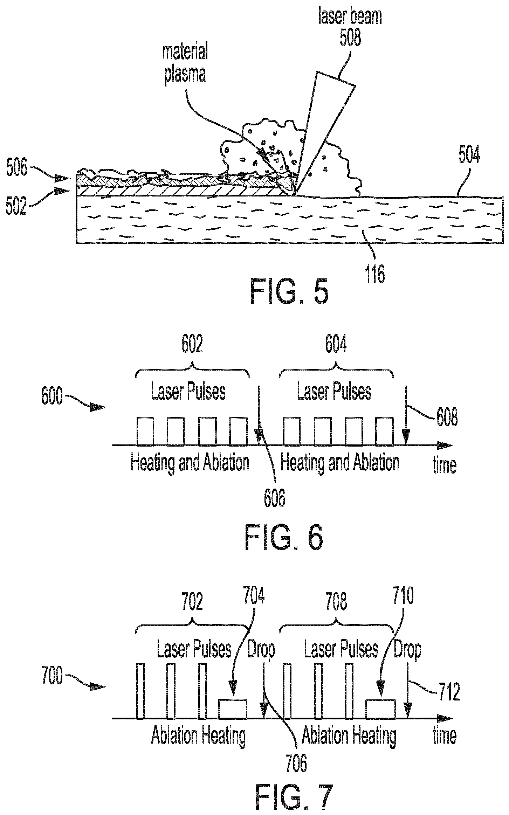

Figure 5 illustrates a cross-sectional view of the substrate 116 having an oxide layer 502 disposed on a top surface 504 of the substrate 116. Figure 5 further illustrates a layer of other contaminants 506 disposed on the oxide layer 504. While Figure 5 illustrates the other contaminants 506 disposed on top of the oxide layer 502, it should be appreciated that the substrate may only include either the other contaminants 506 or the oxide layer 502.

As illustrated in Figure 5, the CHAMP system 102 disclosed herein may be capable of or configured to clean the top surface 504 of the substrate 116 by directing an output 508, such as an output from one or more of the lasers 202, 302 disclosed herein, to the top surface 504 of the substrate 116, thereby removing or eliminating the oxide layer 502 and/or the other contaminants 506 disposed on the surface 504 thereof. It should be appreciated that the CHAMP system 102 may remove the oxide layer 502 and/or the other contaminants 506 while concurrently heating the substrate 116. Cleaning the substrate 116 with the CHAMP system 102 is relatively more environmentally friendly, relatively faster, and automated, as compared to conventional cleaning techniques, such as chemical cleaning and/or mechanical grinding. In one embodiment, when the laser 202, 302 is used, the liquid metal jetting (LMJ) may occur with or without a protective atmospheric shield gas (e.g., around the nozzle 124, the drops, the article 118, or a combination thereof).

The mechanism or process of ablating or removing the oxide layer 502 or other contaminants 506 with the CHAMP system 102 may be at least partially dependent on thermal and/or mechanical ablation, which may at least partially depend on several parameters, such as laser wavelength, pulse width, processing parameters, properties of the oxide layer (e.g., thickness, chemical composition, etc.), the type of substrate 116 (e.g., type of metal), or a combination thereof. As such, the method for cleaning the surface 504 of the substrate 116 may include modulating, regulating, adjusting, or otherwise controlling one or more of a beam profile of the output 508 from the CHAMP system 102, a pulse width of the output 508 from the CHAMP system 102, an amplitude of the output 508 from the CHAMP system 102, a fluence (F) of the output 508 from the CHAMP system 102, a frequency of pulses of the output 508 from the CHAMP system 102 (e.g., repetition rate and/or number of pulses), or a combination thereof.

In at least one embodiment, the pulse duration of the output 508 from the CHAMP system 102 may be maintained relatively lower than a thermal relaxation time of the material of the substrate 116 to minimize thermal damage. For example, the laser output 508 from the CHAMP system 102 may at least partially heat the substrate 116 and the area proximal the substrate 116. In order to avoid or prevent cracking from differential thermal expansion, the pulse duration of the laser output 508 from the CHAMP system 102 may be maintained relatively lower than the thermal relaxation time of the substrate 116 to minimize the temperature increase of the substrate 116.

In at least one embodiment, the output 508 from the CHAMP system 102 may be regulated to minimize or reduce a depth in which the energy of the output 508 penetrates to thereby reduce the heat dissipating to areas proximal the substrate 116.

As used herein, the term or expression "ablation threshold" may refer to a minimum energy (e.g., laser energy density or fluence) necessary or required for material removal by the ablation process. In at least one embodiment, the energy or output 508 from the CHAMP system 102 may be greater than an ablation threshold of the oxide layer 502 and/or the other contaminants 506 disposed on the substrate 116 and less than an ablation threshold of the material of the substrate 116. Accordingly, the output 508 from the CHAMP system 102 may be sufficient to remove the oxide layer 502 and the other contaminants 506 without damaging the material (e.g., metal) of the substrate 116.

Figure 6 illustrates an exemplary scheme 600 for concurrently heating and cleaning or ablating the substrate 116, according to one or more embodiments. The scheme 600 may include outputting one or more pulses 602, 604 from the CHAMP system 102 before, after, and/or in between deposition of the drops 606, 608 of the metal on the substrate 116. For example, as illustrated in Figure 6, the scheme 600 may include a first series of pulses 602 (four are shown) before a first drop 606 and a second series of pulses 604 (four are shown) after the first drop 606 and before the second drop 608. As further illustrated in Figure 6, each of the pulses 602, 604 may have an equal energy output and an equal duration, as indicated by the respective height and width, respectively, of each of the pulses 602, 604. While Figure 6 illustrates series having four pulses 602, 604 it should be appreciated that any pattern of pulses 602, 604 may be utilized. For example, the scheme 600 may include a single pulse 602 prior to the first drop 606 and a series of pulses 604 following the first drop 606 and before the second drop 608. In at least one embodiment, outputting a series of pulses 602, 604 having substantially equal energy output and duration may provide both ablation of the oxide layer 702 on the substrate 116 and heating of the substrate 116.

Figure 7 illustrates another exemplary scheme 700 for concurrently heating and cleaning or ablating the substrate 116, according to one or more embodiments. Similar to the scheme 600, the scheme 700 may include outputting one or more pulses 702, 704, 708, 710 from the CHAMP system 102 before, after, and/or in between deposition of the drops 704, 712 of the metal on the substrate 116. For example, as illustrated in Figure 7, the scheme 700 may include a series of pulses 702, 704 before a first drop 706 and a series of pulses 708, 710 after the first drop 706 and before the second drop 712. The scheme 700 may include one or more of the pulses 702, 704, 708, 710 that may have an energy output and/or a pulse duration different from one or more of the remaining pulses 702, 704, 708, 710. For example, as illustrated in Figure 7, the pulse 704, 710 may have a relatively lower energy output and a longer pulse duration than the remaining pulses 702, 708. The pulses 702, 708 having a relatively shorter pulse duration and a relatively higher energy output may be capable of or configured to at least partially ablate the oxide layer 502 and/or other contaminants 506 from the surface 504 of the substrate 116. The pulses 704 having a relatively longer pulse duration and a relatively lower energy output may be capable of or configured to at least partially heat the substrate 116. The laser may remain on through the drop landing period, or some portion of it, as well and does not need to be turned off before the drop lands. It should be appreciated that any combination of pulse duration and/or pulse energy output may be utilized, and one having ordinary skill in the art would be capable of optimizing the parameters based on factors, such as, the type of oxide layer 502 or contaminants 506 present, the metal utilized for the substrate 116, the type of laser or output 508 utilized for the CHAMP system 102, or the like, or combinations thereof.

While the schemes 600, 700 illustrated in Figures 6 and 7, respectively, consider the energy output and pulse duration of the output 508 from the CHAMP system 102, it should be appreciated that other parameters disclosed herein may also be modified. For example, the laser beam profile, the frequency, or the like, may be modified to optimize the CHAMP system 102.

The CHAMP system 102 disclosed herein may be capable of or configured to heat at least a portion of the substrate 116 and/or an area proximal the substrate 116. For example, the CHAMP system 102 may be capable of or configured to heat at least a portion of the platen 128, a portion of the article 118, respective surfaces thereof, and/or areas proximal thereto. The CHAMP system 102 may heat the portion of the substrate 116 before, during, and/or after deposition of the one or more drops or droplets of the molten metal on the substrate 116 and/or an area proximal the substrate 116. In an exemplary embodiment, the CHAMP system 102 heats the portion of the substrate 116 before and/or during the deposition of the drops on the substrate 116. For example, the CHAMP system 102 may heat the portion of the substrate 116 in between successive drops deposited on the substrate 116. It should be appreciated that the deposition of the drops on the substrate 116 may create or form a melt pool on the substrate 116, and the CHAMP system 102 may be capable of or configured to at least partially modulate (e.g., increase, decrease, alter, etc.) an interfacial temperature or a temperature gradient of the melt pool to thereby control one or more properties of the resulting solid metal forming the article 118. For example, modulating the temperature gradient of the melt pool may allow the 3D printer 100 to control a grain size, grain growth, grain structure, grain orientation, and/or grain boundaries, of the resulting solid metal forming the article 118. It should also be appreciated that metal grain formation, structure, and/or properties (e.g., size, growth, orientation, boundaries, etc.) may at least partially determine one or more mechanical properties of the resulting portion of the article 118. For example, the grain formation and/or structure may at least partially determine a yield stress, ductility, hardness, fatigue life, or combinations thereof, of the resulting solid metal forming the article 118. As such, the CHAMP system 102 may be capable of or configured to at least partially heat the portions of the substrate 116 to thereby control one or more properties of the solid metal forming the article 118.

The CHAMP system 102 may also be capable of or configured to reheat or re-melt a previously deposited drop or section of the article 118 to control the interfacial temperature and/or temperature gradient of the melt pool as the molten metal drops and the previously deposited metals are coalescing to thereby improve the mechanical and/or build qualities of the article 118. It should be appreciated that an amount of heat or thermal energy needed to sufficiently control the temperature gradient of the melt pool may be minimal as a temperature of the article 118 and/or the melt pool or the coalescing region thereof is already maintained at a relatively high temperature. As such, the CHAMP system 102 may be cost effectively operated and provide sufficient thermal energy to control the temperature gradient of the melt pool. It should further be appreciated that the CHAMP system 102 may be operated in an in-line manner such that productivity is not reduced. For example, the CHAMP system 102 may be operated alongside the other components of the 3D printer 100 to provide articles 118 with improved properties and without an off-line secondary or post-printing process.

In addition to the foregoing, the CHAMP system 102 may be capable of or configured to at least partially heat a portion of the substrate 116 near or proximal the deposition of the drops and/or near or proximal the melt pool. For example, the CHAMP system 102 may be capable of or configured to at least partially heat a portion of the substrate 116 adjacent to or outside of the deposition of the drops and/or the melt pool. It should be appreciated that heating the portion of the substrate 116 near, proximal, or adjacent the deposition of the drops and/or the melt pool may reduce surface roughness and/or provide improved surface finishing capabilities as compared to a surface without heating from the CHAMP system 102.

The CHAMP system 102 may directly heat an area having a diameter of from about 0.025 mm to about 2.0 mm. For example, the output 708 (e.g., laser beam) of the CHAMP system 102 may have a diameter or a major axis of from about 0.025 mm to about 2.0 mm. In at least one embodiment, the output 708 of the CHAMP system 102 may have a diameter or a major axis of from about 0.025 mm, about 0.03 mm, about 0.04 mm, about 0.05 mm, about 0.1 mm, about 0.2 mm, about 0.3 mm, or about 0.4 mm to about 0.5 mm, about 0.6 mm, about 0.7 mm, about 0.8 mm, about 0.9 mm, about 0.95 mm, about 1.0 mm, about 1.1 mm, about 1.2 mm, about 1.3 mm, about 1.4 mm, or about 1.5 mm up to 2.0 mm.

The substrate 116, the area proximal the substrate 116, and/or near the article 118 being fabricated may be maintained at a temperature of from about 100°C to about 600°C. For example, the temperature may be from greater than or equal to about 100°C, greater than or equal to about 200°C, greater than or equal to about 300°C, greater than or equal to about 350°C, greater than or equal to about 400°C, greater than or equal to about 450°C, greater than or equal to about 500°C, or greater than or equal to about 550°C, and less than or equal to about 600°C. In another example, the temperature may be from greater than or equal to about 100°C or greater than or equal to about 300°C to less than or equal to about 350°C, less than or equal to about 400°C, less than or equal to about 450°C, less than or equal to about 500°C, less than or equal to about 550°C, or less than or equal to about 600°C. It should be appreciated that all or substantially all the components of the CHAMP system 102 may be capable of or configured to operate in the temperatures of the substrate 116, the area proximal the substrate 116, and/or near the article 118.

The CHAMP system 102 may be capable of or configured to heat the substrate 116 and/or the area proximal the substrate 116 to a temperature of at least 60% to about 100% of a melting point of the build material. For example, the CHAMP system 102 may be capable of or configured to heat the substrate 116 and/or the area proximal the substrate 116 to a temperature of at least 60%, at least 65%, at least 70%, at least 75%, at least 80%, at least 85%, at least 90%, or at least 95% to about 100% of the melting point of the build material. In another embodiment, the CHAMP system 102 may be capable of or configured to increase a temperature of the substrate 116 and/or the area proximal the substrate 116 (e.g., a coalescence area or melt pool) about ± 10%, ± 15%, ±20%, ± 25%, ± 30%, ± 35%, ± 40%, ± 45%, or ± 50% of a melting point of the build material.

As discussed above, one or more parameters of the CHAMP system 102 may be determined, at least in part, by the material or build material of the substrate 116. For example, the pulse energy and/or pulse duration necessary to both ablate and heat may be dependent on the build material. In at least one embodiment, the build material may be or include one or more metals and/or alloys thereof. Illustrative build materials may be or include, but are not limited to, aluminum, aluminum alloys, brass, bronze, chromium, cobalt-chrome alloys, copper, copper alloys, iron alloys (Invar), nickel, nickel alloys (Inconel), nickel-titanium alloys (Nitinol), stainless steel, tin, titanium, titanium alloys, gold, silver, molybdenum, tungsten, or the like, or alloys thereof, or any combination thereof.

In an exemplary operation of the 3D printers 100, 200, 300, 600, with continued reference to Figures 1, 2, 3, 6, and 7, the stage 106 and the substrate 116 may be configured to move with one another relative to the printhead 104 in the x-axis, y-axis, and/or the z-axis. For example, the stage 106 and the substrate 116 may be configured to move with one another in the x-axis, y-axis, and the z-axis while the printhead 104 remains stationary. In another example, the printhead 104 may be configured to move in the x-axis, y-axis, and the z-axis while the stage 106 and the substrate 116 are stationary. In yet another example, the printhead 104 may move in the z-axis and the stage 106 and the substrate 116 may move in the x-axis and the y-axis. Similarly, the stage 106 and the substrate 116 may move in the z-axis while the printhead 104 may move in the x-axis and the y-axis.

The printhead 104 may direct droplets of the build material along a build path on the platen 128 or substrate 116 to form the article 118 drop by drop in a layer by layer manner. The current jetted drop may be directed on a previously jetted drop, which may be surrounded by varying amounts of previously jetted material (e.g., below and/or adjacent). As such, it should be appreciated that the current and/or the previously jetted drops may be maintained at varying temperatures. For example, heat conduction pathways may at least partially depend on the shape and/or design of the article 118. As such, the temperature of the previously jetted drops and/or the current jetted drops may be maintained at different temperatures or differential interfacial temperatures. Further, the jetted drops may form oxides on surfaces thereof upon deposition. In operation, the CHAMP system 102 may be capable of or configured to adjust a temperature of the substrate 116 and/or the area proximal the substrate 116. The CHAMP system 102 may also be capable of or configured to ablate the oxides formed on the surfaces of the substrate 116 prior to deposition of subsequently jetted drops. The CHAMP system 102 may be operated to be at least partially dependent on one or more of a time difference between previous and current droplets of the build material, the oxides and/or other contaminants on the substrate 116, heat conduction differences along varying portions of the article 118, the build path, the type of build material (e.g., polymer, metal, etc.) utilized, a beam profile of the output 508 from the CHAMP system 102, a pulse width of the output 508 from the CHAMP system 102, an amplitude of the output 508 from the CHAMP system 102, a fluence (F) of the output 508 from the CHAMP system 102, a frequency of pulses of the output 508 from the CHAMP system 102 (e.g., repetition rate and/or number of pulses), or combinations thereof.

### System Design Considerations

The aluminum oxide (Al₂O₃) layer may be 10's of nm thick due to the argon shroud. In some embodiments, the layer may be thicker because the build part scanning exposes some build part sections to air. Al₂O₃ is transparent in near-UV, VIS, and NIR. CTE of Al is -3X larger than CTE of Al₂O₃. The surface oxide may be removed due to physical fracture from stress caused by shock waves from rapid transient thermal expansion of the underlying metal.

The copper oxides formed may be cupric oxide (CuO) and cuprous oxide (Cu₂O). The CuO and Cu₂O absorption is -80% to 90% at 355nm, 450nm, and 532nm. The CuO melting point is about 1336°C, the Cu₂O melting point is about 1242°C, and the Cu melting point is about 1083°C. CTE of Cu is -3X larger than CTE of CuO and -9X larger than CTE of Cu₂O. The surface oxide may be removed due to physical fracture from stress caused by shock waves from rapid transient differential thermal expansion.

The pulse duration is less than the thermal relaxation time (e.g., for minimum thermal effects to the substrate). The laser energy may be restricted to a thin depth with less thermal energy dissipated to the surrounding area. The thermal relaxation time may be measured in picoseconds (ps). Thus, nanosecond (ns) and microsecond (µs) pulses may involve/create thermal ablation. Therefore, thermal oxidation may be possible in an oxidizing environment. The inert gas shroud or environment may prevent immediate re-oxidation after ablation.

A fiber-coupled laser (e.g., with a 105 µm core diameter output fiber) may have 60W to 100W output power, 105µm core, 0.22NA, 20µs to 1000µs pulse widths, 1.2mJ to 100mJ, and up to 20kHz repetition rates. In another embodiment, the fiber-coupled laser may have 200W output power, 200µm core, 0.22NA, 20µs to 1000µs pulse widths, 1.2mJ to 200mJ, and up to 20kHz repetition rates. The fiber-coupled laser may also have 808nm, 980nm wavelengths and a Top-hat beam profile.

A blue high-power fiber-coupled laser may have 450nm wavelength, 200µm core, 0.22NA, 200W output power, 20µs to 1000µs pulse widths, 1.2mJ to 200mJ, and up to 20kHz rep. rate. In another embodiment, the blue high-power fiber-coupled laser may have 450nm wavelength, 330µm core, 0.22NA, 500W output power, 20µs to 1000µs pulse widths, 1.2mJ to 500mJ, and up to 5kHz rep. rate. The blue high-power fiber-coupled laser may have a top-hat beam profile.

A fiber laser may have 1070nm wavelength, 100W output power, 10µs to 100µs pulse widths, 1mJ to 10mJ, and up to 50kHz rep. rate. In another embodiment, the fiber laser may have 532nm wavelength, 100W output power, and CW currently available. The fiber laser may have a Gaussian beam profile, or other profiles available with beam shaping optics. The fiber laser may be used to remove oxides from ferrous/non-ferrous metals.

A nanosecond pulse fiber laser may have 355nm, 532nm, 1064nm wavelengths, up to 200W output power, 1ns to 1.5µs pulse widths, 0.1mJ to 10mJ, and up to 2MHz rep. rate. The nanosecond pulse fiber laser may have a Gaussian beam profile, or other profiles available with beam shaping optics. The nanosecond pulse fiber laser may be used to remove oxides from ferrous /non-ferrous metals.

Other embodiments may use a TRUMPF picosecond and femtosecond pulsed green disk lasers (e.g., 515nm). Less than a 1.0 mm spot diameter may be used to reach ablation thresholds of 1 J/cm² to 10 J/cm².

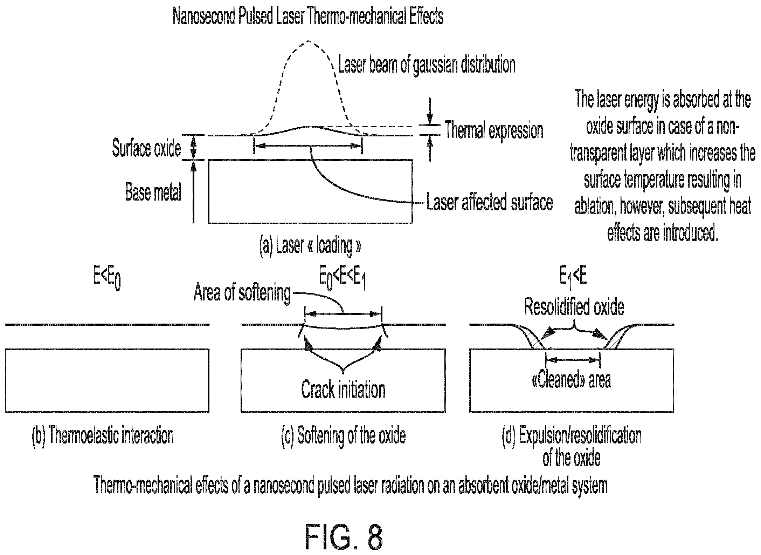

Figure 8 illustrates a schematic view of nanosecond pulsed laser thermo-mechanical effects, according to an embodiment. The laser energy may be absorbed at the oxide surface in the case of a non-transparent layer which increases the surface temperature resulting in ablation. However, subsequent heat effects are also introduced.

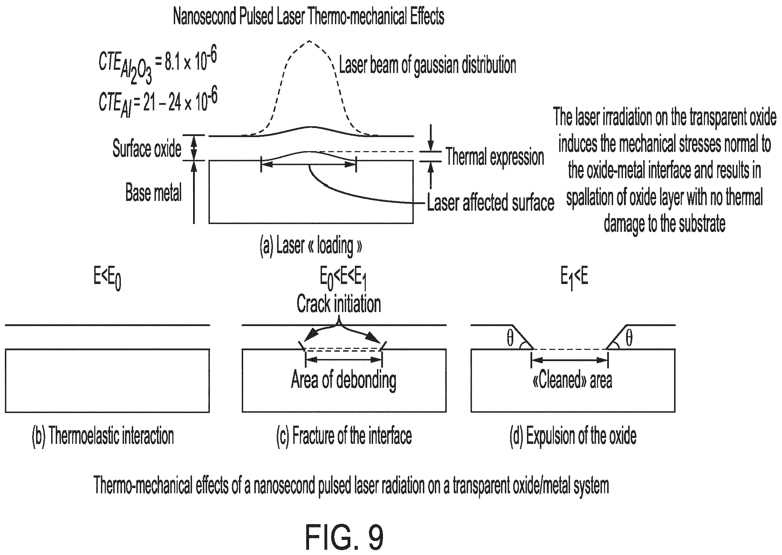

Figure 9 illustrates another schematic view of nanosecond pulsed laser thermo-mechanical effects, according to an embodiment. The laser irradiation on the transparent oxide may induce the mechanical stresses normal to the oxide-metal interface. This may result in spallation of the oxide layer with minimal (e.g., no) thermal damage to the substrate.

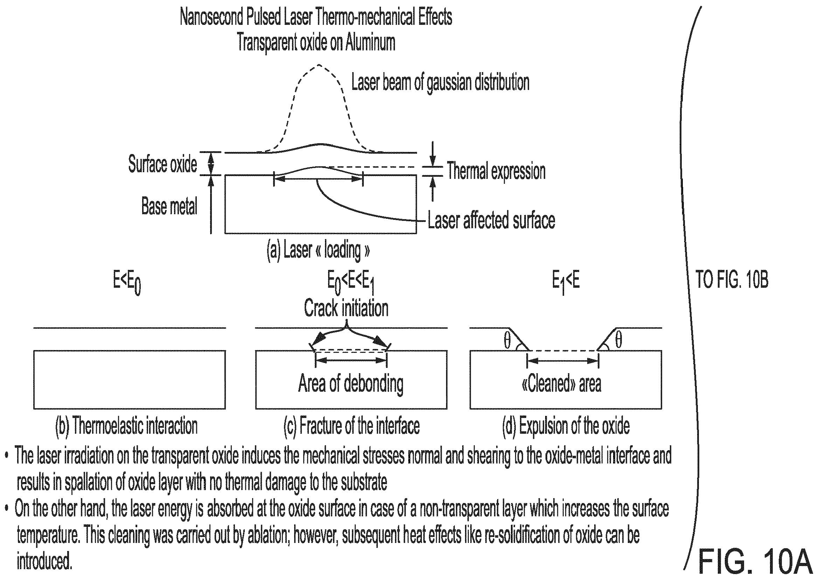

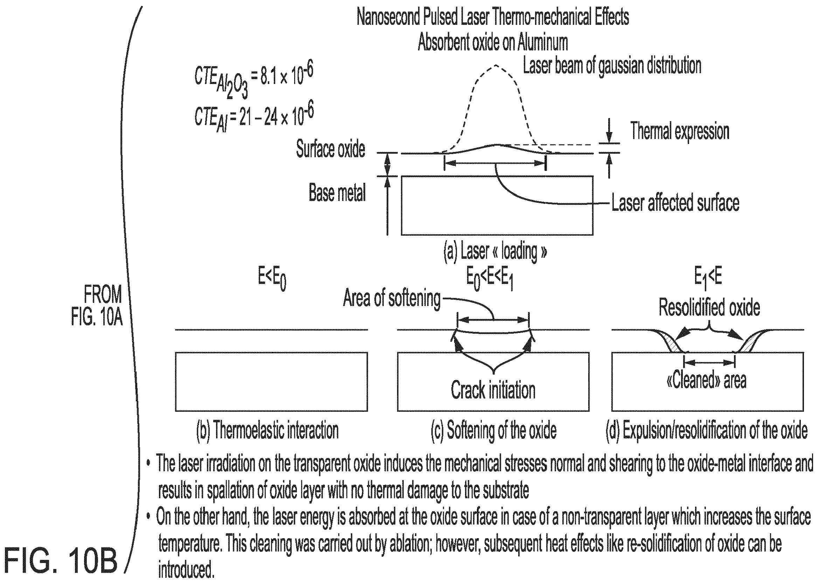

Figures 10A and 10B illustrate additional schematic views of nanosecond pulsed laser thermo-mechanical effects, according to an embodiment. The laser energy may be absorbed at the oxide surface in a case of a non-transparent layer, which increases the surface temperature. This cleaning may be carried out by ablation. However, subsequent heat effects like re-solidification of the oxide can be introduced.

In the case of a completely absorbent oxide, the non-reflected laser energy is absorbed at the near surface region of the oxide, leading to its local thermal expansion. For energies up to a first critical value (e.g., E0), neither the heat input nor the developed stress field are able to induce any damage in the irradiated system (e.g., thermoelastic interactions). For energies in the range of E0<E<E1, softening of the oxide, during temperature increasing, and crack initiation at the borders of the irradiated area, during temperature decreasing, are the main effects of the laser irradiation. For energies higher than a second critical value (e.g., E1), the rapid propagation of in-scale cracks at the borders of the irradiated area, as well as the shear stresses within the surface layer may lead to the fragmentation of the irradiated oxide. However, at elevated temperatures, the oxide exhibits a viscous behavior, which turns the stress relaxation during the fragmentation of the oxide insufficient to result in its total expulsion. Moreover, as the heat transfer is not unidimensional, the viscous heat affected oxide around the formed crater flows, covering the borders of the latter.

In the case of a completely transparent oxide, the non-reflected laser energy, which is absorbed at the near interface region of the metal, leads to the local thermal expansion of the metal and to the consecutive forced deformation of the oxide. The mechanical loading of the oxide can be considered as equivalent to a conventional bending test. For energies up to a first critical value (E0), no damage of the irradiated system takes place. For energies in the range of E0<E<E1, the thermal expansion of the metal corresponds to a bending arrow that results in "dangerous" plane stresses at the borders of the irradiated area, which are hardly loaded. The differential thermal expansion and shrinking of the oxide and the metal induces shear stresses at the interface. The effects of this mixed loading are located at the near-interface area and produce the initiation of cracks within the coating and along the oxide/metal interface. For energies higher than a second critical value (E1), the rapid propagation of in-scale cracks at the borders of the irradiated oxide, as well as at the rapid failure of the interface lead to stress relaxation sufficient to result the expulsion of the detached oxide.

Focused high-power laser beams may be used to ablate the oxide layer that has an ablation threshold lower than the underlying aluminum. The ablation threshold represents the minimum laser energy needed for material removal by the ablation process. The ablation threshold fluences of metals are in a range of 1 to 10 J/cm². The ablation depth depends on the laser energy. The ablation rate may be controlled by the laser fluence, the pulse duration, the number of pulses, the pulse repetition rate (e.g., increasing with higher number of pulses and higher pulse repetition rates), or a combination thereof.

Short pulses with a pulse duration less than the thermal relaxation time is required for minimum thermal damage. The laser energy is restricted to a thin depth with less thermal energy dissipated to the surrounding area.

A sufficient absorption coefficient of a contaminant layer is required to reach the vaporization temperature, while the absorption coefficient of the substrate is minimized to limit the increase of temperature, in order to avoid differential thermal expansion resulting in melting or cracks. Because the laser irradiation is converted into heat, the formation of an oxide layer can occur during the laser radiation or even after the removal of the original oxide. Thermal oxidation can be anticipated when the laser pulse time is greater than thermal relaxation time for aluminum.

One of the important properties of aluminum is an adherent oxide film which normally covers the aluminum. The oxide of aluminum melts at 2060°C, which is 1400°C above the melting point of aluminum. The presence of oxide films on the surface provides corrosion resistance to aluminum because it is durable, highly tenacious, and self-healing. The oxide may be transparent in near-UV, VIS, and NIR. The reaction of the formation of the passive oxide film (Al₂O₃) is:

4A1 + 3O₂ → 2Al₂O₃

2Al (s) + 3H₂O (l) → Al₂O₃ (s) + 6H⁺ (aq) + 6e⁻

Oxide can form within a millisecond in an oxidizing environment. The aluminum oxide film typically has two layers, an inner and outer oxide layer. The inner layer, which has an amorphous structure, is thinner and less stable than the outer hydrated oxide layer. The thickness of the outer oxide layer depends on the oxygen pressure and the solution temperature. The passive oxide film may contain contaminants and defects including pores, cracks, and flaws, which leads to roughness as well as crack and corrosion susceptibility. This is because the outer layer reacts with the external environment. It absorbs moisture in the atmosphere as well as contaminants. The oxide layer tends to grow with the prolonged contact with water. It can transform into bayerite and boehmite at high temperatures.

Alumina has a high melting point, high hardness, moderate tensile and bending resistance, and exhibits brittle fracture behavior, which is the main disadvantage of the mechanical properties of alumina. Alumina is an ionic-covalent solid that does not yield under load as metals and alloys do. Brittleness may cause alumina to fail without any previous plastic deformation at the location of high tensile stresses, such as surface defects, notches, internal flaws, or the occurrence of thermal shock. Alumina also has low electric (high resistivity) and low thermal conductivity.

The copper oxides formed are composed of cupric oxide (CuO) and cuprous oxide (Cu₂O). The CuO melting point is 1336°C, the Cu₂O melting point is 1242°C, and the Cu melting point is 1083°C. Pulsed fiber lasers are available at 355nm and 532nm.

A single pulse irradiation strategy may be used (e.g., 355nm wavelength and a pulse duration of 50 ns). The aim is to remove the oxide layer as completely as possible without damaging the substrate. For a sample with 1 µm thick copper oxide, the intensity of 2.5×10⁷ W/cm² makes the oxide film ripped off without melting. This may be due to the shock wave generated by the quick thermal expansion of the material induced by the laser pulse. When the intensity rises to 3.7×10⁷ W/cm², the copper oxide begins to melt. If the intensity reaches 8×10⁷ W/cm², the substrate of copper begins to melt. Accordingly, the laser intensity threshold is determined as 7.5×10⁷ W/cm². For a sample with 2.5 µm thick copper oxide, the corresponding intensity threshold is 2×10⁸ W/cm². It is clearly shown that the laser intensity threshold increases with the thickness of oxide layer. A 1 µm thick copper oxide is not totally removed by one pulse with the intensity of 7.5×10⁷ W/cm². However, a little higher intensity leads to the damage of substrate. This indicates that it is difficult to experimentally determine a safe laser intensity threshold under this strategy.

A multiple-pulse irradiation strategy may also be used (e.g., 355nm wavelength and a pulse duration of 50 ns). Using multiple-pulses with a lower intensity offers easier control over damage avoidance to the substrate. However, it takes a longer time, and pulse repetition rate plays a role. Under the multiple-pulse strategy, it takes multiple pulses to remove an oxide layer without damaging the substrate while the laser intensity has a much larger window of operation. With a little lower laser intensity, it takes more pulses to remove the oxide but a few extra pulses may not damage the substrate and thus gives a larger safety margin. The higher the laser repetition rate, the fewer the laser pulse number is required. The laser intensity under the multiple-pulse strategy may be higher than the evaporation threshold of CuO and lower than the melting threshold of Cu substrate. The former is determined as 1.19×10⁷ W/cm², and the latter is determined as 6.5×10⁷ W/cm². With an intensity of 5.5×10⁷ W/cm², 3 pulses may not completely remove the oxide film, and 4 pulses do damage the substrate. For an intensity of 3 ×10⁷ W/cm², the crater produced by the 7th pulse ceases to deepen after the very thin oxide layer left by the 6th pulse is removed, and the 8th pulse makes the Cu surface start to melt. With an intensity of 1.25×10⁷ W/cm², the oxide layer is completely removed after the irradiation of 15 pulses. The 16th, 17th and 18th pulses directly irradiating on the naked Cu substrate have no damage to Cu surface. Due to the more severe heat accumulation in the case of 2 kHz, the temperature induced by the 5th pulse is significantly higher than that under 1 kHz. This is the reason that higher repetition rate can reduce the required pulse number to remove the oxides layer under the identical laser intensity.

As mentioned above, mechanisms for pulsed laser ablation include photochemical, photothermal, and photomechanical models. In the photochemical model, absorption of photons leads to a direct dissociation of the molecular bonds by photoablative decomposition. In the photothermal model, ablation occurs when the laser deposits enough energy within the material to cause vaporization. In the photomechanical model, ablation is initiated when the laser-induced stress exceeds the tensile strength of the material. One example is photospallation. Al₂O₃ removal by thermal ablation may be be accompanied by thermal effects to the Al substrate due to Al₂O₃ transparency. Al₂O₃ removed by mechanical breaking of the film layer/spallation using nanosecond laser may instead be performed. CuO and Cu2O may be removed by mechanical spallation when using a nanosecond pulsed laser. CuO and Cu2O may be removed by thermal ablation when using a picosecond or femtosecond laser.

The present disclosure has been described with reference to exemplary implementations. Although a limited number of implementations have been shown and described, it will be appreciated by those skilled in the art that changes may be made in these implementations without departing from the principles and spirit of the preceding detailed description. It is intended that the present disclosure be construed as including all such modifications and alterations insofar as they come within the scope of the appended claims or the equivalents thereof.

## Claims

1. An additive manufacturing device, comprising:
a stage configured to support a substrate;
a printhead disposed above the stage, the printhead configured to heat a build material to a molten build material and deposit the molten build material on the substrate in the form of droplets to fabricate an article; and
a controlled heating and ablation system disposed proximal the printhead, wherein the controlled heating and ablation system is configured to heat the substrate and ablate oxides on a surface of the substrate.

2. The additive manufacturing device of claim 1, wherein the controlled heating and ablation system comprises a laser.

3. The additive manufacturing device of claim 2, wherein the laser comprises one of:
an output power of from about 40 watts (W) to about 1500 W; or
a pulse width of from about 0.5 ns to about 100 ms; or
a pulse energy output of from about 1 microjoule (µJ) to about 50 millijoules (mJ).

4. The additive manufacturing device of claim 2, wherein the laser is configured to deliver an output sufficient to concurrently heat the substrate and ablate the oxides on the surface of the substrate.

5. The additive manufacturing device of claim 4, wherein the laser is configured to adjust a beam profile of the output and wherein the beam profile comprises a Gaussian profile, a Top-Hat profile, a multimode donut profile, or a combination thereof.

6. The additive manufacturing device of claim 1, further comprising:
a monitoring system configured to monitor a portion of the additive manufacturing device; and
a computing system operably coupled with the controlled heating and ablation system and the monitoring system, wherein the computing system is configured to adjust the controlled heating and ablation system based on signals provided by the monitoring system.

7. The additive manufacturing device of claim 6, wherein the monitoring system is configured to measure a temperature of the substrate, and the computing system is configured to adjust the controlled heating and ablation system based on the temperature of the substrate provided by the monitoring system.

8. The additive manufacturing device of claim 1, wherein the controlled heating and ablation system is configured to heat the substrate and ablate the oxides on the surface of the substrate by directing a series of pulsed outputs toward the substrate.

9. The additive manufacturing device of claim 8, wherein the series of pulsed outputs comprises a first pulsed output and a second pulsed output, wherein an energy of the first pulsed output is one of: substantially equal to an energy of the second pulsed output, and wherein a duration of the first pulsed output is substantially equal to a duration of the second pulsed output; or relatively greater than an energy of the second pulsed output, and wherein a duration of the first pulsed output is relatively shorter than a duration of the second pulsed output..

10. A method for fabricating an article with the additive manufacturing device of claim 1, the method comprising:
heating the build material in the printhead to the molten build material;
ejecting the molten build material from the printhead towards the substrate;
depositing the molten build material on the substrate;
heating the substrate with the controlled heating and ablation system; and
ablating the oxides on the surface of the substrate with the controlled heating and ablation system.

11. The method of claim 10, wherein the controlled heating and ablation system concurrently heats the substrate and ablates the oxides on the surface of the substrate comprising directing a series of pulsed outputs from the controlled heating and ablation system toward the substrate to concurrently heat the substrate and ablate the oxides on the surface of the substrate.

12. The method of claim 11, wherein the series of pulsed outputs comprises a first pulsed output and a second pulsed output, wherein an energy of the first pulsed output is substantially equal to an energy of the second pulsed output, and wherein a duration of the first pulsed output is substantially equal to a duration of the second pulsed output.

13. The method of claim 10, wherein the controlled heating and ablation system heats the substrate and ablates the oxides on the surface of the substrate by directing a series of pulsed outputs from the controlled heating and ablation system toward the substrate.

14. The method of claim 13, wherein the series of pulsed outputs comprises a first pulsed output and a second pulsed output, wherein an energy of the first pulsed output is relatively greater than an energy of the second pulsed output, wherein a duration of the first pulsed output is relatively shorter than a duration of the second pulsed output, wherein the first pulsed output ablates the oxides on the surface of the substrate, and wherein the second pulsed output heats the substrate.

15. An additive manufacturing device, comprising:
a stage configured to support a substrate;
a printhead disposed above the stage, the printhead configured to heat a build material to a molten build material and deposit the molten build material on the substrate in the form of droplets to fabricate an article;
a controlled heating and ablation system disposed proximal the printhead, wherein the controlled heating and ablation system comprises a laser, wherein an output from the laser comprises:
a power of from about 40 watts (W) to about 1500 W,
an irradiance of from about 1 W/cm² to about 10,000 W/mm²,
a wavelength of from about 355 nm to about 1200 nm,
a fluence (F) of from about 0.1 J/cm² to about 50 J/cm²,
a pulse energy of from about 1 microjoule (µJ) to about 50 millijoules (mJ),
a pulse repetition rate of from about 5 kHz to about 250 MHz,
a pulse width of from about 0.5 ns to about 100 ms,
a pulse duration that is lower than a thermal relaxation time of the substrate to minimize a temperature increase of the substrate,
wherein the output is configured to concurrently heat the substrate and ablate oxides on a surface of the substrate, and wherein an area on the surface that is heated by the output has a diameter of from about 0.025 mm to about 2.0 mm;
a monitoring system configured to monitor a temperature of the substrate; and
a computing system configured to adjust the controlled heating and ablation system based on the temperature of the substrate provided by the monitoring system.
